**Europäisches Patentamt**

(19) **European Patent Office**

**Office européen des brevets**

(11) Veröffentlichungsnummer: **0 233 301**
**B1**

(12) **EUROPÄISCHE PATENTSCHRIFT**

(45) Veröffentlichungstag der Patentschrift:
22.08.90

(51) Int. Cl.⁵: **F16L 39/02**

(21) Anmeldenummer: **86101979.2**

(22) Anmeldetag: **17.02.86**

(54) **Steckkupplung für mehrere Schlauchverbindungen.**

(43) Veröffentlichungstag der Anmeldung:
**26.08.87 Patentblatt 87/35**

(45) Bekanntmachung des Hinweises auf die Patenterteilung:
**22.08.90 Patentblatt 90/34**

(84) Benannte Vertragsstaaten:
**AT BE CH DE FR GB IT LI NL SE**

(56) Entgegenhaltungen:
AU-B- 495 387
DE-A- 2 242 715
DE-A- 2 537 407
US-A- 4 453 566

(73) Patentinhaber: **Hydrotechnik GmbH, Holzheimer Strasse 94-96, D-6250 Limburg 1(DE)**

(72) Erfinder: **Hofmann, Manfred, Lahnblick 28, D-6251 Altendiez(DE)**

(74) Vertreter: **Linser, Heinz et al, Patentanwälte Heinz Linser Dipl. Ing. Eckhardt Eyer Robert-Bosch-Strasse 12a Postfach 10 22 10, D-6072 Dreieich(DE)**

## Beschreibung

Die Erfindung betrifft eine Steckkupplung für mehrere Schlauchverbindungen, insbesondere für Meß-, Steuer- oder Regelleitungen fluidischer Systeme mit Hochdrucken von mehreren hundert bar oder Unter- und wechselnden Drucken, zur Betätigung von Hand, bestehend aus einem Stecker- und Dosenstück mit jeweils einem federbelasteten mechanisch betätigbaren Rückschlagventil in jeder Druckader und zugeordneten als Ventilöffner dienenden durchbohrten fliegenden Kolben.

Aus der DE-A 2 537 407 ist eine Monokupplung bekannt, welche einen fliegenden Kolben aufweist, jedoch ist diese Schlauchkupplung nicht für hohe Drücke geeignet, sondern nur für 5 • 88–19 • 61 bar (6 bis 20 atü). Die lose angeordneten Dichtscheiben gestatten keine Verwendung hoher Drücke von beispielsweise mehreren hundert bar während des Kupplungsvorganges.

Es sind andererseits bereits Ventilkupplungen, insbesondere Ventil-Meßkupplungen für fluidische Systeme mit hohen Arbeitsdrücken bekannt, welche aus einer unter Leitungsdruck stehenden Kupplungsbuchse bestehen, in deren Bohrung ein federbelastetes und mechanisch betätigbares Rückschlagventil angeordnet ist.

Ventilkupplungen dieser Art dienen zum Beispiel zur Herstellung von Prüf- oder Meßanschlüssen an Druckleitungen, wobei in der Regel die Kupplungsbuchse mit Außengewinde fest an der Druckleitung eines zum Beispiel Hydraulik- oder Pneumatiksystems installiert ist. Für die Dauer der Prüf- oder Meßarbeiten wird auf diese Kupplungsbuchse ein als Hohlzapfen ausgebildeter Dichtnippel mittels Überwurfmutter aufgeschraubt, der fest mit einem Schlauch verbunden ist. Die Kupplungen können beispielsweise unter Druck, d.h. ohne die Anlage stillzusetzen, über Meßschläuche mit den entsprechenden Meßgeräten verbunden werden. Bei Anschluß fest installierter Geräte, zum Beispiel Manometer, Manometer-Wahlschalter und Druckschalter können die flexiblen Meßschläuche wie Elektrokabel verlegt werden, so daß eine aufwendige Rohrverlegung entfällt.

Mit solchen Meßkupplungen lassen sich daher die effektiven Arbeitsdrücke direkt am Hydraulikgerät messen, wobei kein Lösen von Entlüftungsschrauben und Rohrverschraubungen erforderlich ist.

Solche Kupplungen finden bei den verschiedensten Bauelementen und Regelungen von Hydraulik- oder Pneumatiksystemen Verwendung. Nach dem Trennen des Kupplungsanschlusses wird auf die Kupplungsbuchse mit Außengewinde eine Schutzkappe aufgeschraubt, die den Zweck hat, das Eindringen von Schmutz in die Kupplungsbuchse zu verhindern und welche darüberhinaus eine zusätzliche Abdichtungsfunktion übernimmt, für den Fall, daß ein in die Kupplungsbuchse installiertes Rückschlagventil nicht absolut dicht schließt.

Ventilkupplungen der genannten Art gehen beispielsweise aus der DE-PS 2 756 084 hervor, wobei die Ventilkörper als Kegel oder Kugeln ausgebildet sind. Bei dieser bekannten Ventilkupplung ist der Ventilkörper als Rückschlagventil auf einer Druckfeder federbeweglich angeordnet und weist an einem oberen Kontaktende einen Strömungskanal auf. Die Ventilkupplung ist dabei mit einem Dicht- und Verdrehsicherungsring versehen, dessen Dichtfunktion jedoch nur dann gewährleistet ist, wenn eine entsprechende Schlauch- oder Verschlußkappe mit ihrem Dichtnippel fest auf die Kupplungsbuchse aufgeschraubt ist.

Sobald diese Kappe gelöst ist, bzw. falls eine solche Kappe überhaupt nicht vorhanden ist – wie zum Beispiel bei Manometerwahlschaltern –, erfolgt die Abdichtung des Druckmediums nur noch durch das entsprechende Rückschlagventil. Ein Rückschlagventil für solche Hochdruck-Ventilkupplungen zeigt jedoch konstruktionsbedingt je nach Viskosität des Druckmediums eine mehr oder weniger stark ausgeprägte Undichtheit bzw. ist unter Serienbedingungen jedenfalls nicht als praktisch dichte Ausführung darstellbar.

Für Verschlauchungen in der allgemeinen Hydraulik und für Gasfülleinrichtungen von Hydraulikspeichern ist eine derartige Ausbildung ausreichend, doch ergeben sich schon dann Reklamationen wegen Undichtheit, wenn zum Beispiel bei mehreren Ventilkupplungen gleichzeitig die Kappen gelöst werden, um mit einer Meßeinrichtung nacheinander mehrere Meßstellen zu prüfen, wenn bei Hydraulikspeichern Gasdruck-Prüfeinrichtungen ohne Nachfüllmöglichkeit benutzt werden, oder wenn die Ventilkupplungen zur Überwachung von Anlagen mit brennbaren Gasen etc. eingesetzt sind.

Zur Anwendung in Manometer-Wahlschaltern ist der Einsatz solcher Ventilkupplungen wegen ständiger Leckage an den jeweils nicht benutzten Anschlüssen überhaupt nicht möglich. Es ist bei den genannten Ventilkupplungen auch schon versucht worden, das Rückschlagventil mit gummielastischen Dichtungen bzw. üblichen O-Ringen auszustatten, jedoch konnte hierdurch trotz anfänglicher, genügender Dichtheit nicht in allen Fällen ein positives Ergebnis erzielt werden. Bei langen Meßleitungen und großen Totvolumina in Manometern oder in dem angeschlossenen Kreislauf und insbesondere bei niedrigviskosen Flüssigkeiten oder höheren Betriebsdrücken bzw. bei Prüfeinrichtungen für Hydrospeicher erfolgt ein Auswaschen der gummielastischen Dichtung, da eine hohe Druckdifferenz beim Abheben des Ventils eine sehr starke Strömung des verwendeten Mediums an der Dichtung bewirkt.

Aus diesen Gründen wurde bereits eine Ventilkupplung, vorzugsweise eine Ventil-Meßkupplung vorgeschlagen, welche für fluidische Systeme mit hohen Arbeitsdrücken und Medien unterschiedlichster Viskosität geeignet ist. Hierbei wurden Maßnahmen vorgeschlagen, die aus einem elastomeren Werkstoff bestehende Dichtung gegen Kavitation und Auswaschungen zu schützen und die Wirkung von großen Volumina in Meßleitungen oder dergleichen des angeschlossenen Kreislaufs auf die elastomere Dichtung auszuschalten, indem bei einer Ventilkupplung ein zylindrischer Ventilkörper, welcher mit der Außenkante und/oder Stirnfläche seiner Dichtschulter im geschlossenen Ventilzustand gegen eine aus elastomerem Werkstoff bestehenden Dichtring preßt, mit der Kupplungsbuchse bzw. einer in der Kupplungsbuchse angeordneten Dichtbuchse einen abdichtbaren Strömungskanal bildet, wobei stromabwärts und/oder stromaufwärts zum Dichtring weitere Dichtungen angeordnet sind, welche bei Aufstoßen des Ventilkörpers ihre Dichtfunktion erst nach dem Abheben des Dichtringes von der Dichtschulter vorzugsweise verzögert beenden. Durch diese Maßnahme wird sichergestellt, daß die aufgrund der hohen Druckdifferenz entstehende Strömung unmittelbar nach dem Ablösen des elastomeren Dichtringes von seiner Ventilschulter gedrosselt oder nahezu zum Stillstand gebracht wird.

Die Abnahme der Dichtfunktion der stromabwärts und/oder stromaufwärts zum Dichtring angeordneten Dichtungen während des Aufstoßvorganges des Ventilkörpers verläuft im Vergleich zur Abnahme der Dichtfunktion des Dichtringes über einen längeren Hubweg. Auf diese Weise üben die stromabwärts und/oder stromaufwärts zum Dichtring angeordneten Dichtungen noch ihre Dichtfunktion aus, während aufgrund des kürzeren Hubweges des Dichtringes dieser der nachteiligen Wirkung einer sonst entstehenden Strömung und einer sich dadurch ausgebildeten Kavitation oder Auswaschung entzogen ist.

Der Einsatz von Hydraulikanlagen im Verbund mit anderen Systemkomponenten und von elektrohydraulischen Elementen erfordert bei Ausfall oder mangelhafter Funktion eine möglichst schnelle und genaue Diagnose, so daß der Zustand bestimmter Baugruppen unmittelbar erkannt werden kann. Hierzu sind Druckmeßdaten möglichst vieler Komponenten des Systems in kurzer Zeit, vorzugsweise gleichzeitig erforderlich. Hierzu eignen sich die eingangs beschriebenen Meßkupplungen besonders. Diese werden an den strategisch wichtigen Meßpunkten einer Anlage verlegt und ggf. auf einer Blende mittels Meßleitungen zusammengefaßt. Werden nunmehr die Messungen durchgeführt, so müssen die Hochdruckschläuche einzeln mit den Monomeßpunkten verbunden werden. Verwechslungen der Anschlüsse beim Anschließen sind oftmals die Folge, so daß Falschmessungen durchgeführt werden. Darüberhinaus können aber auch angeschlossene Meßgeräte beschädigt oder zerstört werden, wenn die eingehenden Meßwerte nicht mit den Meßbereichen des Gerätes übereinstimmen.

Es sind ferner Mehrfachkupplungen bekannt, welche sich jedoch nur bei geringen Systemdrücken von Hand betätigen lassen. Bei Systemen mit hohen Drücken läßt sich der Kupplungsvorgang nur maschinell durchführen oder das System muß vor dem Kupplungsvorgang drucklos geschaltet werden.

Der Erfindung liegt die Aufgabe zugrunde eine Steckkupplung anzugeben, welche die Vorteile der bereits vorgeschlagenen Monokupplung verwendet und diese zu einer Vielfachkupplung entwickelt, um in einem Hydrauliksystem oder einem System mit fluidischen Komponenten Meß-, Steuer- oder Regelplätze an verschiedenen Stellen des Systems zusammenzufassen und die erfaßten Drücke über eine Multileitung zu übertragen, so daß die Messungen – aufgenommen an den verschiedensten Punkten des Systems – an zentraler Stelle und – falls erforderlich – auch gleichzeitig durchgeführt werden können.

Die Lösung dieser Aufgabe erfolgt dadurch, daß nach der Erfindung sowohl das Stecker- als auch das Dosenstück ein Gehäuse mit mehreren achsparallelen Bohrungen zur Aufnahme jeweils einer Kupplungsbuchse mit Radialspiel zum Gehäuse aufweisen und in jeder Kupplungsbuchse ein Rückschlagventil mit einem zylindrischen Ventilkörper angeordnet ist, welcher mit der Außenkante und/oder Stirnfläche seiner Dichtschulter im geschlossenen Ventilzustand gegen einen Dichtring preßt, der mit der Kupplungsbuchse oder einer in der Kupplungsbuchse angeordneten Dichtbuchse einen abdichtbaren Strömungskanal bildet, wobei jedes Rückschlagventil des Steckerstückes den fliegenden Kolben aufweist, dessen Ausgangsnippel zum Aufstoßen des zylindrischen Ventilkörpers des ihm zugeordneten Rückschlagventils des Dosenstückes und dessen Eingangsnippel zum Aufstoßen des Ventilkörpers seines Rückschlagventils des Steckerstückes ausgebildet ist, und daß in jedem Rückschlagventil des Dosen- und des Steckerstückes stromabwärts und/oder stromaufwärts zum aus elastomerem Werkstoff bestehenden Dichtring eine weitere Strömungskanal-Dichtung angeordnet ist, welche beim Aufstoßen des zylindrischen Ventilkörpers durch den Eingangs- oder Ausgangsnippel des jeweiligen fliegenden Kolbens beim Kuppelvorgang ihre Dichtfunktion erst nach dem Abheben des Dichtringes von der Dichtschulter verzögert beendet.

In Weiterbildung der Erfindung weist der fliegende Kolben einen äußeren Anschlagbund zur Begrenzung seiner Eindringtiefe in das ihm zugeordnete Ventil des Dosenstückes und einen inneren Anschlagbund zur Begrenzung der Eindringtiefe in das ihm nachgeordnete Ventil auf, wobei jede Bohrung im Gehäuse des Steckerstückes ausgangsseitig mit einer Hinterdrehung zur Begrenzung der Achsialbewegung des fliegenden Kolbens versehen ist.

In vorteilhafter Weise weist jede Kupplungsbuchse an ihrer Ausgangsseite einen Sprengring auf, welcher gegen einen Bund eines Schlauchnippels anliegt und von einer ein- oder mehrteiligen, durch Verschraubungen verspannten Lochscheibe gehalten ist.

Das Gehäuse des Dosenstückes und ihre Lochscheibe weisen eine zentrale Bohrung auf, in der ein Zentrierstift zur Zentrierung der Lochscheibe angeordnet ist.

Die Lochscheibe des Steckerstückes ist vorteilhaft mit einer zentralen Gewindebohrung versehen, in der sich ein Spannbolzen zur Verspannung der Lochscheibe befindet und welcher mit einem aus dem Gehäuse des Steckerstückes reichenden Einfädel- und Zentrierstift versehen ist.

Die Frontseiten der Gehäuse des Dosen- und des Steckerstückes weisen radial wirkende Kodierstifte auf, welche beim Kuppelvorgang in definierte Kodierbohrungen eingreifen.

In vorteilhafter Weise ragt der Zentrierstift länger als die Kodierstifte aus dem Gehäuse des Steckerstückes.

Schließlich weist das Steckerstück eine drehbar gelagerte Verschraubungshülse mit Innengewinde auf und die Außenseite des Gehäuses des Dosenstückes ist mit einem in das Innengewinde der Verschraubungshülse greifenden Gewinde versehen und an ihrem Umfang weist sie radial gerichtete Flügel auf.

Die Erfindung wird anhand der Figuren näher erläutert. Hierbei zeigen:

Figur 1 einen Längsschnitt durch ein Steckerstück und ein damit gekuppeltes Dosenstück;

Figur 2 eine vergrößerte Darstellung eines in der Figur 1 mit X bezeichneten Ausschnittes, und

Figur 3 jeweils einen Schnitt E–F und C–D nach Figur 1.

In den verschiedenen Zeichnungen bzw. Abbildungen sind gleiche Elemente mit gleichen Bezugszeichen versehen, während gleichartige Elemente mit gleicher Bezifferung und mit Indizes bezeichnet sind.

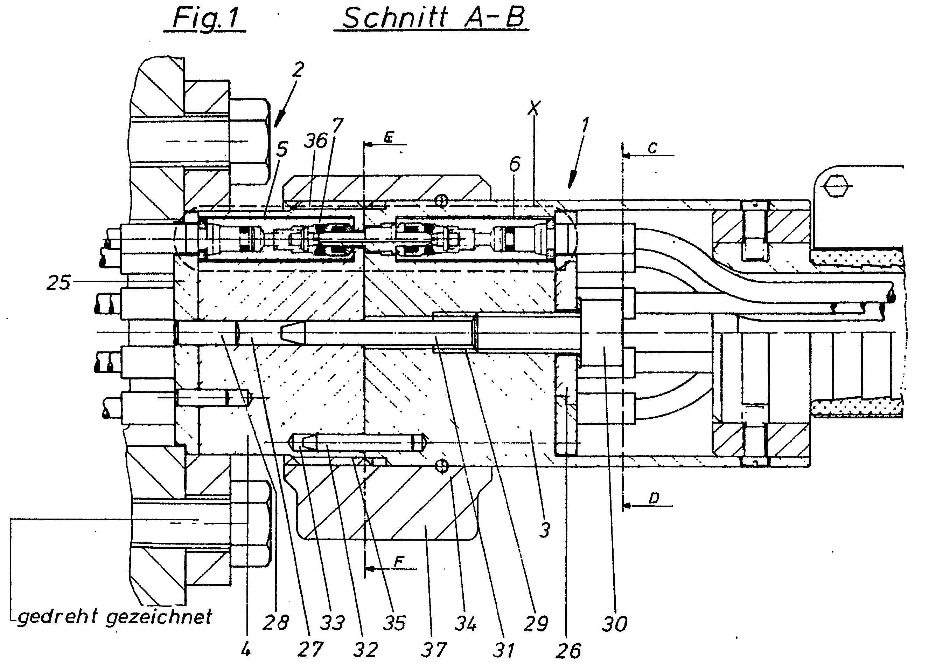

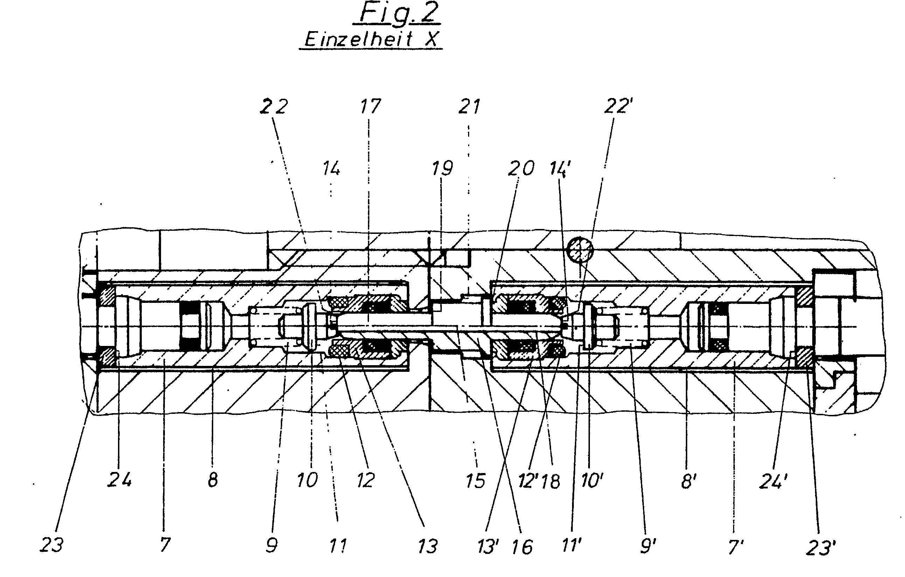

Die Figur 1 zeigt ein Steckerstück 1, welches mit einem Dosenstück 2 gekoppelt ist. Das Steckerstück 1 weist ein Gehäuse 3 auf und in entsprechender Weise besitzt auch das Dosenstück 2 ein Gehäuse 4. Beide Gehäuse 3 und 4 sind mit mehreren achsparallelen Bohrungen 5 bzw. 6 zur Aufnahme jeweils einer Kupplungsbuchse 7 bzw. 7' mit einem Radialspiel 8 bzw. 8' versehen. Die Kupplungsbuchsen 7' des Steckerstückes 1 sind gleichartig zu den Kupplungsbuchsen 7 des Dosenstückes 2 ausgebildet, so daß vorerst die Beschreibung einer Kupplungsbuchse 7 in dem Dosenstück 2 erfolgt. Hierzu wird auch gleichzeitig auf die Figur 2 verwiesen.

In jeder Kupplungsbuchse 7 befindet sich ein federbelastetes und mechanisch betätigbares Rückschlagventil 9 mit einem zylindrischen Ventilkörper 10. Der Ventilkörper 10 preßt mit der Außenkante und/oder Stirnfläche seiner Dichtschulter 11 im geschlossenen Ventilzustand gegen einen Dichtring 12, der mit der Kupplungsbuchse 7 bzw. einer in der Kupplungsbuchse 7 angeordneten Dichtbuchse 13 einen abdichtbaren Strömungskanal 14 bildet.

Die gleichen Elemente befinden sich in den Kupplungsbuchsen 7' der Steckerstücke 1. Jedes mechanisch betätigbare Rückschlagventil 9' des Steckerstückes 1 weist jedoch einen gefesselten und mit einer Durchbohrung 15 versehenen fliegenden Kolben 16 auf, dessen Ausgangsnippel 17 zum Aufstoßen des zylindrischen Ventilkörpers 10 des ihm zugeordneten mechanisch betätigbaren Rückschlagventils 9 des Dosenstückes 2 und dessen Eingangsnippel 18 zum Aufstoßen des zylindrischen Ventilkörpers 10' des mechanisch betätigbaren Rückschlagventils 9' des Steckerstückes 1 dient und dementsprechend ausgebildet ist.

Der fliegende Kolben 16 ist mit einem äußeren Anschlagbund 19 zur Begrenzung seiner Eindringtiefe in das ihm zugeordnete mechanisch betätigbare Rückschlagventil 9 des Dosenstückes 2 versehen.

Ferner weist der fliegende Kolben einen inneren Anschlagbund 20 zur Begrenzung der Eindringtiefe in das ihm nachgeordnete mechanisch betätigbare Rückschlagventil 9' des Steckerstückes 1 auf. Jede Bohrung 5 im Gehäuse des Steckerstückes 1 ist ausgangsseitig mit einer Hinterdrehung 21 zur Begrenzung der Axialbewegung des fliegenden Kolbens 16 versehen.

In jedem mechanisch betätigbaren Rückschlagventil 9 bzw. 9' des Dosen- und des Steckerstückes 2 bzw. 1 ist stromabwärts und/oder stromaufwärts zum Dichtring 12 bzw. 12' eine weitere Strömungskanal-Dichtung 22 bzw. 22' angeordnet, welche beim Aufstoßen des zylindrischen Ventilkörpers 10 bzw. 10' durch den Eingangs- oder Ausgangsnippel 18 bzw. 17 des jeweiligen fliegenden Kolbens 16 beim Kuppelvorgang ihre Dichtfunktion erst nach dem Abheben des Dichtringes 12 bzw. 12' von der Dichtschulter 11 bzw. 11' verzögert beendet.

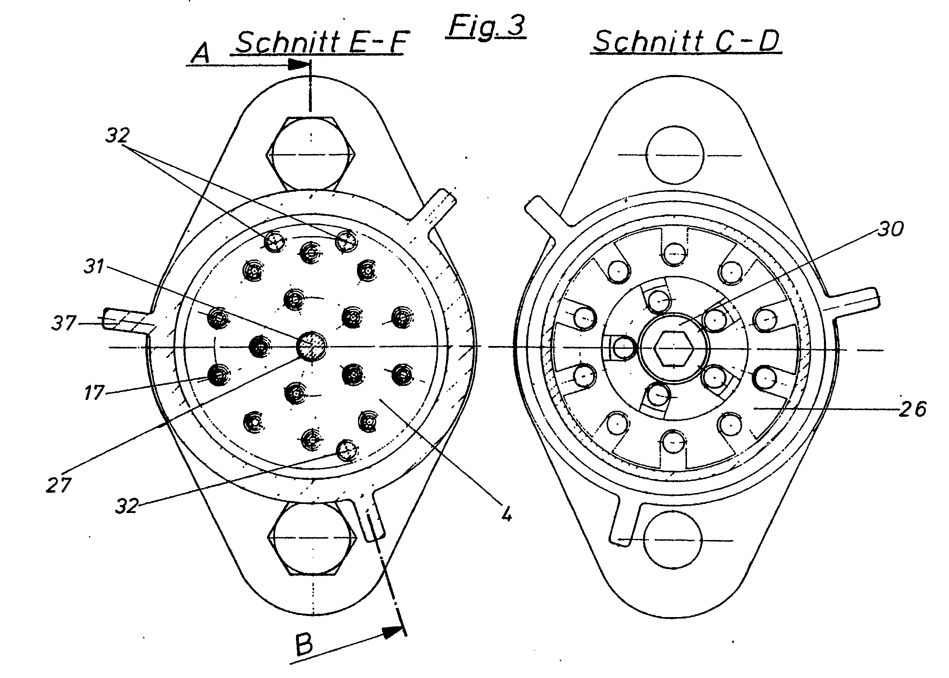

Jede Kupplungsbuchse 7 ist an ihrer Ausgangsseite mit einem Sprengring 23 bzw. 23' versehen, welcher gegen einen Bund 24 bzw. 24' des entsprechenden Schlauchnippels anliegt und von einer ein- oder mehrteiligen, durch Verschraubungen verspannten Lochscheibe 25 bzw. 26 (s. hierzu Figur 3) gehalten ist.

Das Gehäuse 4 des Dosenstückes 2 und seine Lochscheibe 25 sind mit einer zentralen Bohrung 27 versehen, in der der Zentrierstift 28 zur Zentrierung der Lochscheibe 25 angeordnet ist.

Das Gehäuse 3 des Steckerstückes 1 ist mit einer zentralen Gewindebohrung 29 versehen, in der sich ein Spannbolzen 30 zur Verspannung der Lochscheibe 26 befindet und welcher mit einem aus dem Gehäuse des Steckerstückes 1 reichenden Einfädel- und Zentrierstift 31 versehen ist. Im gekoppelten Zustand erstreckt sich der Zentrierstift 31 des Steckerstückes 1 in die Bohrung 27 des Dosenstückes 2, wodurch der Einfädelvorgang und die Zentrierung gesichert sind. Um dies zu erreichen, ragt der Zentrierstift 31 länger aus dem Gehäuse 3 des Steckerstückes 1 als die Kodierstifte 32, welche der richtigen radialen Zuordnung dienen.

Zur Sicherstellung der radialen Zuordnung des Steckerstückes zum Dosenstück weisen die Frontseiten der Gehäuse 3 und 4 des Dosen- und des Steckerstückes 1 und 2 radial wirkende Kodierstifte 32 auf, welche beim Kuppelvorgang in definierte Kodierbohrungen 33 eingreifen.

Das Steckerstück 2 ist ferner mit einer drehbar gelagerten Verschraubungshülse 34 mit Innengewinde 35 versehen und die Außenseite des Gehäuses 4 des Dosenstückes 2 ist mit einem in das Innengewinde 35 der Verschraubungshülse 34 greifenden Gewinde 36 versehen.

Die drehbar gelagerte Verschraubungshülse 34 weist ferner an ihrem Umfang radial gerichtete Flügel 37 auf.

Wie aus der Figur 2 hervorgeht, preßt die obere Stirnfläche bzw. die Außenkante der Dichtschulter 10 bzw. 10' im geschlossenen Ventilzustand gegen den aus einem elastomeren Werkstoff bestehenden Dichtring 12 bzw. 12'. Stromabwärts zum Dichtring 12 bzw. 12' bildet der Ventilkörper 10 bzw. 10' mit einem Ringsteg der Dichtbuchse 13 bzw. 13' eine in Form einer Drosselstrecke ausgebildete Dichtung.

Wird der Ventilkörper 10 mit Hilfe des Ausgangsnippels 17 des fliegenden Kolbens 16 aufgestoßen, so hebt der Dichtring 12 von der Dichtschulter 11 des Ventilkörpers 10 ab, während die als Drosselstrecke ausgebildete Dichtung ihre Dichtfunktion weiterhin aufrechterhält, bis der Ringsteg der Dichtbuchse 13 den kegelförmigen oberen Teil des Ventilkörpers 10 verläßt. In entsprechender Weise wirkt der Eingangsnippel 18 des fliegenden Kolbens 16 auf den Ventilkörper 10' ein.

Die Vermeidung einer Strömung oder Reduzierung der Geschwindigkeit des an der Strömungskanaldichtung 22 vorbeiströmenden Mediums bewirkt, daß eine Auswaschung oder Kavitation dieser Dichtung verhindert wird. Damit wird erreicht, daß das gesamte Dichtungssystem bei äußerst hohen Drücken und auch für Gase anwendbar ist, wobei durch die Zuordnung und Ausbildung der verschiedenen Dichtungen eine äußerst lange Lebensdauer sichergestellt wird.

Mit der Erfindung ist nunmehr die Möglichkeit gegeben, eine Vielzahl von Meß-, Steuer- oder Regelleitungen eines fluidischen Systems über eine mit einer Steckkupplung versehene Leitung zu einer zentralen Meß- oder Regelstelle zu führen, um dort die aufgenommenen Meß- oder Steuerwerte zentral verarbeiten zu können.

## Patentansprüche

1. Steckkupplung für mehrere Schlauchverbindungen, insbesondere für Meß-, Steuer- oder Regelleitungen fluidischer Systeme mit Hochdrucken von mehreren hundert bar oder Unter- und wechselnden Drucken, zur Betätigung von Hand, bestehend aus einem Stecker- und Dosenstück mit jeweils einem federbelasteten mechanisch betätigbaren Rückschlagventil in jeder Druckader und zugeordneten als Ventilöffner dienenden durchbohrten fliegenden Kolben, dadurch gekennzeichnet, daß sowohl das Stecker- als auch das Dosenstück (1 bzw. 2) ein Gehäuse (4) mit mehreren achsparallelen Bohrungen (5, 6) zur Aufnahme jeweils einer Kupplungsbuchse (7, 7') mit Radialspiel (8, 8') zum Gehäuse (4) aufweisen und in jeder Kupplungsbuchse (7, 7') ein Rückschlagventil (9, 9') mit einem zylindrischen Ventilkörper (10, 10') angeordnet ist, welcher mit der Außenkante und/oder Stirnfläche seiner Dichtschulter (11, 11') im geschlossenen Ventilzustand gegen einen Dichtring (12, 12') preßt, der mit der Kupplungsbuchse (7, 7') oder einer in der Kupplungsbuchse angeordneten Dichtbuchse (13, 13') einen abdichtbaren Strömungskanal (14, 14') bildet, wobei jedes Rückschlagventil (9, 9') des Steckerstückes (1) den fliegenden Kolben (16) aufweist, dessen Ausgangsnippel (17) zum Aufstoßen des zylindrischen Ventilkörpers (10) des ihm zugeordneten Rückschlagventils (9) des Dosenstückes (2) und dessen Eingangsnippel (18) zum Aufstoßen des Ventilkörpers (10') seines Rückschlagventils (9') des Steckerstückes (1) ausgebildet ist, und daß in jedem Rückschlagventil (9, 9') des Dosen- und des Steckerstückes stromabwärts und/oder stromaufwärts zum aus elastomerem Werkstoff bestehenden Dichtring (12, 12') eine weitere Strömungskanal-Dichtung (22, 22') angeordnet ist, welche beim Aufstoßen des zylindrischen Ventilkörpers (10, 10') durch den Eingangs- oder Ausgangsnippel (18 bzw. 17) des jeweiligen fliegenden Kolbens (16) beim Kuppelvorgang ihre Dichtfunktion erst nach dem Abheben des Dichtringes (12, 12') von der Dichtschulter (11, 11') verzögert beendet.

2. Steckkupplung nach Anspruch 1, dadurch gekennzeichnet, daß der fliegende Kolben (16) einen äußeren Anschlagbund (19) zur Begrenzung seiner Eindringtiefe in das ihm zugeordnete Rückschlagventil (9) des Dosenstückes (2) und einen inneren Anschlagbund (20) zur Begrenzung der Eindringtiefe in das ihm nachgeordnete Rückschlagventil (9') des Steckerstückes (1) aufweist, wobei jede Bohrung (5) im Gehäuse des Steckerstückes (1) ausgangsseitig mit einer Hinterdrehung (21) zur Begrenzung der Axialbewegung des fliegenden Kolbens (16) versehen ist.

3. Steckkupplung nach Anspruch 1 oder 2, dadurch gekennzeichnet, daß jede Kupplungsbuchse (7, 7') an ihrer Ausgangsseite einen Sprengring (23, 23') aufweist, welcher gegen einen Bund (24, 24') eines Schlauchnippels anliegt und von einer ein- oder mehrteiligen, durch Verschraubungen verspannten Lochscheibe (25, 26) gehalten ist.

4. Steckkupplung nach Anspruch 1, 2 oder 3, dadurch gekennzeichnet, daß das Gehäuse (4) des Dosenstückes (2) und die Lochscheibe (25) eine zentrale Bohrung (27) aufweisen, in der ein Zentrierstift (28) zur Zentrierung der Lochscheibe (25) angeordnet ist.

5. Steckkupplung nach Anspruch 1 oder einem der voranstehenden Ansprüche, dadurch gekennzeichnet, daß das Gehäuse (3) des Steckerstückes (1) eine zentrale Gewindebohrung (29) aufweist, in der sich ein Spannbolzen (30) zur Verspannung der Lochscheibe (26) befindet und welcher mit einem aus dem Gehäuse des Steckerstückes (1) reichenden Einfädel- und Zentrierstift (31) versehen ist.

6. Steckkupplung nach Anspruch 1 oder einem der voranstehenden Ansprüche, dadurch gekennzeichnet, daß die Frontseiten der Gehäuse (3, 4) des Dosen- und des Steckerstückes (1, 2) radial wirkende Kodierstifte (32) aufweisen, welche beim Kuppelvorgang in definierte Kodierbohrungen (33) eingreifen.

7. Steckkupplung nach Anspruch 1 oder einem der voranstehenden Ansprüche, dadurch gekennzeichnet, daß der Zentrierstift (31) länger als die Kodierstifte (32) aus dem Gehäuse (3) des Steckerstückes (1) ragt.

8. Steckkupplung nach Anspruch 1 oder einem der voranstehenden Ansprüche, dadurch gekennzeichnet, daß das Steckerstück (2) eine drehbar gelagerte Verschraubungshülse (34) mit Innengewinde (35) aufweist und die Außenseite des Gehäuses (4) des Dosenstückes (2) mit einem in das Innengewinde (35) der Verschraubungshülse (34) greifenden Gewinde (36) versehen ist.

9. Steckkupplung nach Anspruch 1 oder einem der voranstehenden Ansprüche, dadurch gekennzeichnet, daß die drehbar gelagerte Verschraubungshülse (34) an ihrem Umfang radial gerichtete Flügel (37) aufweist.

## Claims

1. A plug-and-socket type coupling or connector, particularly for measuring, controlling or governing pipes of fluid-carrying systems under high pressures of several hundred atmospheres or negative and alternating pressures, for manual operation, comprising a plug and socket elements having a spring-loaded mechanically operated check or non-return valve in each pressure line and associated loose transpierced plunger acting as a valve opener, characterised in that the plug as well as the socket element (1 and 2, resp.) have a casing (4) having several axially parallel bore (5, 6) for reception of a coupling sleeve (7, 7') in each case, with radial play (8, 8') with respect to the casing (4) and each coupling sleeve (7, 7') having arranged in it a non-return valve (9, 9') comprising a cylindrical valve member (10, 10') which has its outer edge and/or end face of its sealing step or shoulder (11, 11') thrust in the closed condition of the valve against a sealing ring (12, 12') which together with the coupling sleeve (7, 7') or a sealing sleeve (13, 13') situated in the coupling sleeve forms a sealable flow passage (14, 14'), each non-return valve (9, 9') of the plug element (1) incorporating the loose piston (16), whereof the output nipple (17) is formed for push-opening of the cylindrical valve member (10) of the non-return valve (9) allocated to it of the socket element (2) and whereof the input nipple (18) is formed for push-opening of the valve member (10') of its non-return valve (9') of the plug element (1) and that in each non-return valve (9, 9') of the socket and plug elements and downflow and/or upflow of the sealing ring (12, 12') consisting of elastomeric material is installed another flow passage seal (22, 22') which upon opening impingement on the cylindrical valve member (10, 10') by the corresponding loose piston (16) during the coupling action ends its sealing action in a delayed manner only after the sealing ring (12, 12') is lifted off the sealing shoulder (11, 11').

2. A plug-and-socket type connector according to claim 1, characterised in that the loose piston (16) has an external stop collar (19) for limitation of its depth of penetration into the non-return valve (9) allocated to it of the socket element (2) and an internal stop collar (20) for limitation of the depth of penetration of the non-return valve (9') following it of the plug element (1), each bore (5) in the casing of the plug element (1) being provided at the output side with a relief (21) for limitation of the axial displacement of the loose piston (16).

3. A plug-and-socket type connector according to claim 1 or 2, characterised in that each coupling sleeve (7, 7') is provided at its output side with a circlip (23, 23') which bears against a collar (24, 24') of a hose nipple and is held by a perforated disc (25, 26) in one or more pieces, which is clamped by means of screw connections.

4. A plug-and-socket type connector according to claim 1, 2 or 3, characterised in that the casing (4) of the socket element (2) and the perforated disc (25) have a central bore (27) in which is situated a centring stud (28) for centring of the perforated disc (25).

5. A plug-and-socket type connector according to claim 1 or one of the preceding claims, characterised in that the casing (3) of the plug element (1) has a central tapped bore (29) wherein is situated a clamping bolt (30) for clamping the perforated disc (26) and which is provided with a threading and centring pin (31) protruding out of the casing of the plug element (1).

6. A plug-and-socket type connector according to claim 1 or one of the preceding claims, characterised in that the front sides of the casings (3, 4) of the socket and plug elements (1, 2) have radially acting coding pins (32) which during the coupling action engage in particular coded bores (33).

7. A plug-and-socket type connector according to claim 1 or one of the preceding claims, characterised in that the centring pin (31) projects out of the casing (3) of the plug element (1) with a greater length than the coding pins (32).

8. A plug-and-socket type connector according to claim 1 or one of the preceding claims, characterised in that the plug element (2) has a rotatably arranged screw sleeve (34) with an internal screw thread (35) and that the outer side of the casing (4) of the socket element (2) is provided with a screw-thread (36) engaging in the internal screw-thread (35) of the screw sleeve (34).

9. A plug-and-socket type connector according to claim 1 or one of the preceding claims, characterised in that the rotatably arranged screw sleeve (34) has radially directed fins on its periphery.

## Revendications

1. Accouplement enfichable pour plusieurs raccords de tuyaux, en particulier pour des lignes de mesure, de commande ou de réglage de systèmes fluidiques à hautes pressions de plusieurs centaines de bars, ou à des pressions négatives ou des pressions alternantes, à commande manuelle, se composant d'une partie mâle et d'une partie femelle, avec chaque fois un clapet anti-retour chargé par ressort à commande mécanique dans chaque conducteur de pression, et à pistons mobiles percés associés faisant fonction de contacts de soupape, caractérisé en ce qu'aussi bien la partie mâle que la partie femelle (1, resp. 2) présentent un boîtier (4) avec plusieurs alésages (5, 6) parallèles à l'axe, pour recevoir chaque fois une douille d'accouplement (7, 7') à jeu radial (8, 8') par rapport au boîtier (4) et où un clapet anti-retour (9, 9') avec un corps de soupape cylindrique (10, 10') est disposé dans chaque douille d'accouplement (7, 7'), et exerce avec le bord extérieur et/ou la face de son épaulement d'étanchéité (11, 11'), dans l'état fermé du clapet, une pression contre une bague d'étanchéité (12, 12'), formant avec la douille d'accouplement (7, 7') ou avec une douille d'étanchéité (13, 13') disposée dans la douille d'accouplement, un canal d'écoulement (14, 14') à rendre étanche, dans lequel chaque clapet anti-retour (9, 9') de la partie mâle (1) présente le piston mobile (16) dont la partie de sortie (17) est configurée pour l'ouverture du corps de soupape cylindrique (10), du clapet anti-retour (9) de la partie femelle (2) associée, et dont la partie d'entrée (18) est configurée pour l'ouverture du corps de soupape (10'), du clapet anti-retour (9') de la partie mâle (1) et que, dans chaque clapet anti-retour (9, 9') de la partie mâle et de la partie femelle en aval et/ou en amont de la bague d'étanchéité (12, 12') en matière élastomère, est disposée une autre étanchéification du canal d'écoulement (22, 22') qui, lors de l'ouverture du corps de soupape cylindrique (10, 10') par la partie d'entrée ou de sortie (18, resp. 17) du piston mobile correspondant (16), lors du processus d'accouplement, ne termine de façon retardée sa fonction d'étanchéification qu'après séparation de la bague d'étanchéité (12, 12') de l'épaulement d'étanchéité (11, 11').

2. Accouplement enfichable selon la revendication 1, caractérisé en ce que le piston mobile (16) présente un collet de butée extérieur (19) pour limiter sa profondeur de pénétration dans le clapet anti-retour (9) de la partie femelle (2), et un collet de butée intérieur (20) pour limiter sa profondeur de pénétration dans le clapet anti-retour (9') de la partie mâle (1), chaque alésage (5) dans le boîtier de la partie mâle (1) étant muni de son côté de sortie d'une contre-dépouille (21) pour limiter le mouvement axial du piston mobile (16).

3. Accouplement enfichable selon les revendications 1 ou 2, caractérisé en ce que chaque douille d'accouplement (7, 7') présente à son côté de sortie un jonc (23, 23') qui est disposé contre un collet (24, 24') d'un raccord fileté de tuyau, et qui est maintenu par un disque perforé (25, 26) en une ou en plusieurs parties, fixé par des vis.

4. Accouplement enfichable selon les revendications 1, 2 ou 3, caractérisé en ce que le boîtier (4) de la partie femelle (2) et le disque perforé (25) présentent un alésage central (27) dans lequel est disposé une goupille de centrage (28), pour le centrage du disque perforé (25).

5. Accouplement enfichable selon la revendication 1 ou une des revendications précitées, caractérisé en ce que le boîtier (3) de la partie mâle (1) présente un alésage fileté (29) dans lequel se trouve un boulon de serrage (30) pour la fixation du disque perforé (26) et qui est muni d'une goupille d'insertion et de centrage (31) sortant du boîtier de la partie mâle (1).

6. Accouplement enfichable selon la revendication 1 ou une des revendications précitées, caractérisé en ce que les faces du boîtier (3, 4) de la partie femelle et de la partie mâle (1, 2) présentent des goupilles de codage (32) à fonctionnement radial qui s'engagent, lors du processus d'accouplement, dans des alésages de codage (33) définis.

7. Accouplement enfichable selon la revendication 1 ou une des revendications précitées, caractérisé en ce que la goupille de centrage (31) sort plus que la goupille de codage (32) du boîtier (3) de la partie mâle (1).

8. Accouplement enfichable selon la revendication 1 ou une des revendications précitées, caractérisé en ce que la partie mâle (2) présente une douille à visser (34) logée de façon rotative avec filet intérieur (35), et dont le côté extérieur du boîtier (4) de la partie femelle (2) est muni d'un filet (36) s'engageant dans le filet intérieur (35) de la douille à visser (34).

9. Accouplement enfichable selon la revendication 1 ou une des revendications précitées, caractérisé en ce que la douille à visser (34) logée de façon rotative possède des ailes radiales (37) à son pourtour.

Fig.1  Schnitt A-B

Fig.2
Einzelheit X

## Fig. 3

Schnitt E-F                    Schnitt C-D

EP 0 233 301 B1